# EUROPEAN PATENT APPLICATION

(11) **EP 4 825 728 A1**
(43) Date of publication of application: **21.10.2026**
(21) Application number: 26173010.5
(22) Date of filing: 17.04.2026
(51) Int. Cl.: B64C 27/57, B64C 13/16, B64C 25/34, B64C 27/04, G05D 1/00, B64C 13/50

(54) **GEAR FORCE FEEDBACK CONTROL SYSTEM FOR AIRCRAFT**

(30) Priority: 17.04.2025 US 202563790472 P
(71) Applicant: Lockheed Martin Corporation, Bethesda, Maryland 20817 (US)
(72) Inventor: Fradkin, Aaron Joshua, Stratford, CT, 06615-9129 (US); Monahan, Jay Benjamin, Stratford, CT, 06615-9129 (US); Faynberg, Alex, Stratford, CT, 06615-9129 (US); Spoldi, Steven E., Stratford, CT, 06615-9129 (US)
(74) Representative: Schmitt-Nilson Schraud Waibel Wohlfrom Patentanwälte Partnerschaft mbB

(57) **Abstract**

A control system for a rotary-wing aircraft includes landing gear sensors configured to measure force on a plurality of landing gear assemblies and a controller communicably coupled to the landing gear sensors and configured to receive an input command for the aircraft, determine, based on data from the landing gear sensors, a total force supported by the plurality of landing gear assemblies, adjust a control algorithm based on the total force supported by the plurality of landing gear assemblies, calculate an output command by inputting the input command into the adjusted control algorithm, and transmit the output command to control the aircraft.

## Description

This application claims the benefit of and priority to U.S. Provisional Patent Application No. 63/790,472, filed April 17, 2025.

The present invention relates generally to control systems for rotor blades of rotary-wing aircraft.

Rotary aircraft (e.g., helicopters) typically include fly-by-wire controls rather than manual cockpit controls alone. In a fly-by-wire system, movements of cockpit controls by an operator, such as the collective control, the cyclic stick, and the yaw pedals, are converted to electronic signals transmitted electronically to a flight control computer. The flight control computer determines how to adjust various actuators that control the swashplate or a control surface to provide a response to a command from the operator. Rather than directly converting the control inputs into actuator outputs, the fly-by-wire system uses control algorithms to adjust the actuator outputs based on various information, including sensor data from inertial sensors, airspeed sensors, and other sensors included in the aircraft.

While fly-by-wire systems provide a control algorithm that allows operators (e.g., pilots) to control the aircraft more easily in flight, these control algorithms are typically changed or disabled when the aircraft is in contact with the ground. During take-off, landing, taxiing, and ground idling, a different control algorithm is typically used because the sensors used during flight cannot account for the effects of the ground contact. Control algorithms when the aircraft is in contact with the ground tend to provide less control assistance to the operator, making handling more difficult and labor-intensive. In some cases, the aircraft may not be able to take off in high winds or from a surface exceeding a maximum slope angle. Further, the transition from the air control algorithm to the ground control algorithm can be abrupt and difficult for the operator of the aircraft to adjust to.

The present disclosure describes a rotary-wing aircraft with landing gear force sensors configured to detect the contact of the landing gear with a surface. Rather than switching control algorithms when the aircraft is in contact with the ground, the air control algorithm is adjusted based on the measurements from the force sensors, so the aircraft control strategy and behavior remain similar when the aircraft is in the air or on the ground.

At least one aspect of the present disclosure relates to a control system for a rotary-wing aircraft including landing gear sensors configured to measure force on a plurality of landing gear assemblies, and a controller communicably coupled to the landing gear sensors and configured to receive an input command for the aircraft, determine, based on data from the landing gear sensors, a total force supported by the plurality of landing gear assemblies, adjust a control algorithm based on the total force supported by the plurality of landing gear assemblies, calculate an output command by inputting the input command into the adjusted control algorithm, and transmit the output command to control the aircraft.

At least one aspect relates to a control system in which as the total force supported by the plurality of landing gear assemblies increases from zero to the full weight of the aircraft, the control algorithm transitions from an air control mode in which the control algorithm is not affected by the data from the landing gear sensors to a ground control mode in which the effect of the data from the landing gear sensors on the control algorithm is at a maximum.

At least one aspect relates to a control system in which when the total force supported by the plurality of landing gear assemblies is between zero and the full weight of the aircraft, parameters of the air control mode and the ground control mode are adjusted or blended based on the total force supported by the plurality of landing gear assemblies.

At least one aspect relates to a control system in which the controller is configured to determine a ground slope angle of a surface in contact with the plurality of landing gear assemblies based in part on a difference between the force on two or more of the landing gear assemblies.

At least one aspect relates to a control system in which the output command is calculated based in part on the determined ground slope angle and transmitted to one or more actuators to adjust the pitches of rotor blades cyclically around the azimuth of the rotary-wing aircraft.

At least one aspect relates to a control system in which the output command is calculated to maintain a proportional force differential between two of the landing gear assemblies throughout a takeoff or a landing of the aircraft.

At least one aspect relates to a control system in which the output command is calculated to maintain a substantially equal amount or a commanded differential amount of force on a left landing gear assembly and a right landing gear assembly.

At least one aspect relates to a control system in which the output command is calculated to maintain a force on one of the landing gear assemblies below a predetermined threshold force.

At least one aspect relates to a control system in which the controller is configured to determine a wind speed based in part on a difference between the force on two or more of the landing gear assemblies, wherein the output command is calculated based in part on the wind speed and transmitted to one or more actuators to cyclically adjust the pitches of rotor blades of the rotary-wing aircraft.

At least one aspect relates to a control system in which during a takeoff of the aircraft from a surface with a non-zero ground slope angle, the output command is calculated such that the trajectory of the aircraft is the same as the trajectory of the aircraft during a takeoff from a surface with a ground slope angle of zero, in response to the same input command.

At least one other aspect relates to a method of controlling a rotary-wing aircraft, the method including receiving, at a user interface, an input command, receiving data from one or more landing gear sensors configured to measure force on a plurality of landing gear assemblies of the aircraft, determining, based on the data from the one or more landing gear sensors, a total force supported by the plurality of landing gear assemblies, adjusting, by a controller, a control algorithm based on the total force supported by the plurality of landing gear assemblies such that the effect of the data from the one or more landing gear sensors on the control algorithm is correlated to the total force supported by the plurality of landing gear assemblies, calculating an output command by inputting the input command into the adjusted control algorithm, and transmitting the output command to control the aircraft.

At least one aspect relates to a method as described above and further including determining a ground slope angle of a surface in contact with the plurality of landing gear assemblies based in part on a difference between the force on two or more of the landing gear assemblies, wherein the output command is adjusted based in part on the determined ground slope angle.

At least one aspect further relates to a method in which the output command is calculated such that the trajectory of the aircraft at takeoff on a non-zero ground slope is similar to the trajectory of the aircraft at takeoff on level ground, or in which the output command is adjusted based on the relative force on the landing gear assemblies.

At least one aspect relates to a method including determining a wind speed based at least in part on a difference between the force on two or more of the landing gear assemblies, in which the output command is calculated based at least in part on the determined wind speed.

At least one aspect relates to an aircraft including a fuselage including a user interface, a flight sensor array coupled to the fuselage, a rotor system coupled to the fuselage and including a plurality of rotor blades and at least one actuator configured to cyclically adjust the pitch of the rotor blades, a plurality of landing gear assemblies each including a landing gear sensor configured to measure force on the respective landing gear assembly, and a controller communicably coupled to the user interface, the landing gear sensors, and the at least one actuator and configured to receive, from the landing gear sensors, landing gear sensor data indicating the forces on the plurality of landing gear assemblies, receive, from the flight sensor array, flight sensor data, determine, based on the landing gear sensor data, a total weight supported by the landing gear assemblies, receive, from the user interface, user input, determine an output command by inputting the user input, the flight sensor data, and the landing gear sensor data into a control algorithm, wherein the influence on the control algorithm of the landing gear sensor data relative to the flight sensor data is correlated to the total weight supported by the landing gear assemblies, and transmit the output command to the at least one actuator to cyclically adjust the pitch of the rotor blades.

At least one aspect relates to an aircraft in which, when the total weight supported by the landing gear assemblies is zero, the influence of the landing gear sensor data on the control algorithm is zero, and when the total weight supported by the landing gear assemblies is equal to a total weight of the aircraft, the influence of the landing gear sensor data on the control algorithm is at a maximum.

At least one aspect relates to an aircraft in which the controller is further configured to determine, based on the flight sensor data and the landing gear sensor data, at least one of a ground slope angle or a wind speed, and wherein the output command is calculated to control the cyclic pitch of the rotor blades to compensate for the at least one of the ground slope angle or the wind speed.

At least one aspect relates to an aircraft in which the output command is calculated to maintain a substantially equivalent amount or a commanded differential amount of force on a left landing gear assembly and a right landing gear assembly during a takeoff or a landing of the aircraft.

At least one aspect relates to an aircraft in which the output command is determined by further inputting one or more differences between forces on the landing gear assemblies.

### BRIEF DESCRIPTION OF THE DRAWINGS

FIG. 1 is a front view of a rotary-wing aircraft, according to some embodiments, in contact with the ground showing the roll moments of the landing gear about a predetermined point.
FIG. 2 is a side view of the rotary-wing aircraft of FIG. 1 showing the pitch moments of the landing gear about a predetermined point.
FIG. 3 is a front view of the rotary-wing aircraft of FIG. 1 in a crosswind showing more force on the downwind gear.
FIG. 4 is a front view of the rotary-wing aircraft of FIG. 1 on a sloped surface showing more force on the downward gear.
FIG. 5 is a schematic diagram of a control system of the rotary-wing aircraft of FIG. 1, according to some embodiments.
FIG. 6 is a schematic diagram of a control algorithm for the rotary-wing aircraft of FIG. 1, according to some embodiments.
FIG. 7 is a flowchart of a method of operating a rotary-wing aircraft according to some embodiments.

It will be recognized that the figures are schematic representations for purposes of illustration. The figures are provided for the purpose of illustrating one or more implementations with the explicit understanding that the figures will not be used to limit the scope of the meaning of the claims.

Following below are more detailed descriptions of various concepts related to, and implementations of, methods and systems for modifying control algorithms for rotary-wing aircraft based on data from landing gear force sensors. The various concepts introduced above and discussed in greater detail below may be implemented in any of a number of ways, as the described concepts are not limited to any particular manner of implementation. Examples of specific implementations and applications are provided primarily for illustrative purposes.

Referring to the figures generally, various embodiments disclosed herein relate to modifying control algorithms for rotary-wing aircraft based on data from landing gear force sensors. As explained in more detail herein, the methods include modifying parameters in the control algorithms based on the total amount of aircraft weight borne by the landing gear assemblies of the aircraft. Thus, when the weight borne by the landing gear assemblies increases and the weight borne by the rotor system decreases, the impact that the landing gear sensors have on the control algorithm increases. The sensor data from the landing gear sensors can allow for control algorithms with higher amounts of augmentation when the aircraft is in contact with the ground. This can reduce the amount of effort required by the operator of the aircraft (e.g., the pilot) to maintain control of the aircraft (i.e., the operator's workload).

By re-parameterizing the control algorithms based on the total amount of aircraft weight borne by the landing gear, a smooth transition from an air control algorithm to a ground control algorithm can be achieved. Such re-parameterization provides enhanced ease of operation in comparison to control systems that switch to a low-augmentation control algorithm whenever the aircraft is in contact with the ground, in which control algorithms that are not re-parameterized with sensor data from landing gear sensors. In particular, enhanced operability can be achieved due to the relatively high-augmentation air control algorithm permitting a gradual change from air control to ground control. Further, a high-augmentation air control algorithm can permit additional ease of operability when taking off or landing in high winds and/or on a highly inclined surface as compared to a low-augmentation ground control algorithm. The methods described herein allow for higher augmentation control algorithms when in contact with the ground, decreasing operator workload during takeoff and landing.

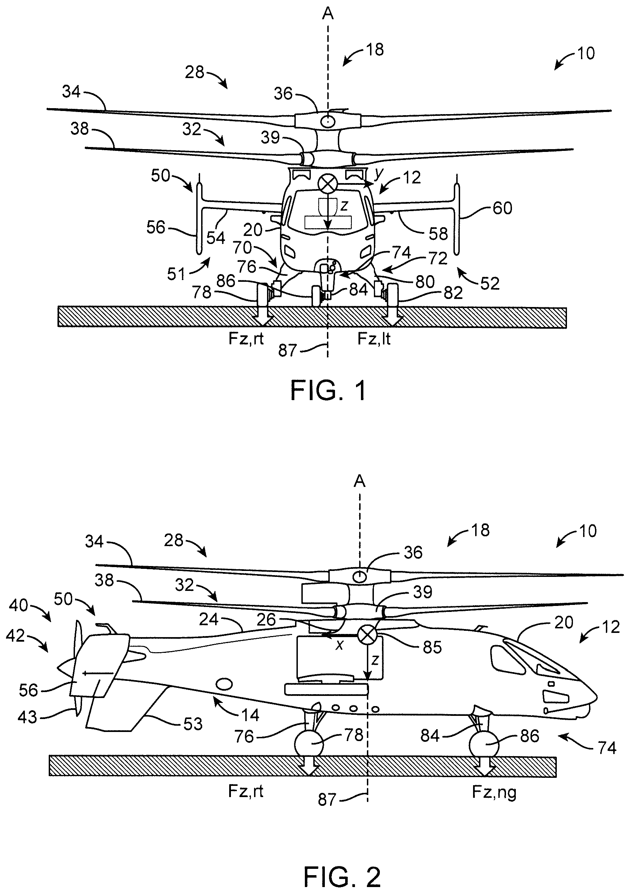

FIGS. 1 and 2 are respectively a front view and a side view of a rotary-wing aircraft, in accordance with some embodiments. More particularly, FIGS. 1 and 2 depict an exemplary aircraft as shown and described in U.S. Patent No. 11,370,532, which is incorporated by reference herein in its entirety for the overall aircraft system shown therein and construction thereof. FIG. 1 depicts an exemplary embodiment of a rotary-wing, vertical takeoff and landing (VTOL) aircraft 10. Aircraft 10 includes an airframe or fuselage 12 having a plurality of surfaces with an extending tail 14. A coaxial main rotor assembly 18 is located at the fuselage 12 and rotates about a main rotor axis A. In an exemplary embodiment, the fuselage 12 includes a cockpit 20 having seats for flight crew (e.g., pilot and co-pilot) and passengers. Main rotor assembly 18 is driven by a power source, for example, one or more engines 24, via a gearbox 26. Main rotor assembly 18 includes an upper rotor assembly 28 that may be driven in a first direction (e.g., counterclockwise) about the main rotor axis A, and a lower rotor assembly 32 that may be driven in a second direction (e.g., clockwise) about the main rotor axis A, opposite to the first direction (i.e., counter-rotating rotors). The upper rotor assembly 28 includes a first plurality of rotor blades 34 supported by a first or upper rotor hub 36. The lower rotor assembly 32 includes a second plurality of rotor blades 38 supported by a second or lower rotor hub 39.

In some embodiments, aircraft 10 may include a longitudinal thrust system 40 having a propulsor assembly 42 or a propeller located at extending tail 14 to provide translational thrust (forward or rearward) for aircraft 10. Propulsor assembly 42 includes a plurality of propulsor blades 43. Although a particular aircraft configuration is illustrated in this non-limiting embodiment, other configurations may be employed (e.g., although the dual rotor system is depicted as coaxial, embodiments include single, dual, and other multi-rotor designs). Propulsor assembly 42 or translational thrust system 40 is connected to and driven by the engine 24 via the gearbox 26. In accordance with another aspect of an exemplary embodiment, extending tail 14 includes a tail section 50 including starboard and port horizontal stabilizers 51 and 52. Tail section 50 also includes a vertical stabilizer 53 that extends downward from extending tail 14. Starboard horizontal stabilizer 51 includes a starboard active elevator 54 and a starboard active rudder 56. Similarly, the port horizontal stabilizer 52 includes a port active elevator 58 and a port active rudder 60. Elevators 54 and 58 and rudders 56 and 60 act as controllable surfaces, e.g., surfaces that alter a flight path/characteristics of aircraft 10.

As noted above, in a fly-by-wire system, movements of cockpit controls by an operator, such as the collective control and the cyclic control, are converted to electronic signals transmitted electronically to a flight control computer. The flight control computer determines how to adjust various actuators that control the swashplates or other flight control surfaces to provide a response to a command from the operator. Rather than directly converting the control inputs into actuator outputs, the fly-by-wire system uses control algorithms to adjust the actuator outputs based on various information, including ground speed, air speed, and the yaw, roll, and pitch attitudes of the aircraft. For example, in response to an identical cyclic control input, the control algorithms may adjust the actuators differently depending on whether the aircraft is experiencing a crosswind or a headwind. Thus, the aircraft may move forward in a straight line in response to the operator moving the cyclic control forward, even if a crosswind would otherwise cause the aircraft to drift sideways.

These systems greatly reduce operator workload and enhance safety. With increased data regarding factors that affect the performance of the aircraft, the control algorithm can more strongly augment the manual flight controls to aid an operator to control the aircraft. The present disclosure includes embodiments that allow for highly augmented control algorithms to be implemented even when an aircraft is in contact with the ground (e.g., when a portion of the aircraft is not airborne, when one or more wheels or skids or a portion of the landing gear contacts a ground surface, etc.). In particular, low-augmentation algorithms may be used where existing sensors cannot provide sufficient information to take into account the effects of the ground contact. Using low-augmentation control algorithms during ground contact can be preferable to highly augmented control algorithms operating with incorrect or incomplete data that does not take into account the effect of the ground contact due to integrator windup and other negative effects. In the embodiments disclosed herein, the data from the existing sensors is supplemented with data from landing gear force sensors, which allow for a more highly augmented control algorithm when in contact with the ground.

In the embodiment shown in FIGS. 1 and 2, the aircraft includes three landing gear assemblies: a right (starboard) landing gear assembly 70 including a right strut 76 and a right wheel 78, a left (port) landing gear assembly 72 including a left strut 80 and a left wheel 82, and a nose landing gear assembly 74 including a nose strut 84 and a nose wheel 86. Each of the struts 76, 80, 84 may include actuators configured to move the landing gear assemblies 70, 72, 74 between a stowed position and a deployed position (shown) and shock absorbers to absorb impact at landing. The wheels 78, 82, 86 may each include tires that contact the ground. FIGS. 1 and 2 also show the center of gravity 85 of the aircraft 10 and the line of gravity 87, a vertical line passing through the center of gravity 85. The line of gravity 87 is between the right landing gear assembly 70 and the left landing gear assembly 72 in the lateral direction (i.e., left to right) of the aircraft 10 and between both the right and left landing gear assemblies 70, 72 and the nose landing gear assembly 74 in the longitudinal direction (i.e., nose to tail) of the aircraft 10. Thus, in the absence of other loads, the aircraft 10 is stable when supported by the landing gear assemblies 70, 72, 74 on flat ground. In such a condition, the operator of the aircraft 10 is likely to be able to easily take off without the assistance of a highly augmented control algorithm.

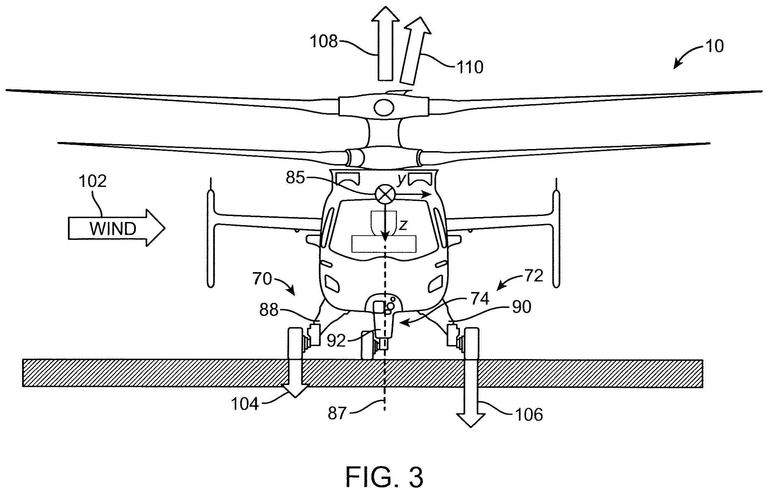

However, when the aircraft is on a slope or when there are significant winds, it may become much more difficult for an operator to control the aircraft 10 during takeoff without a highly augmented control algorithm. FIG. 3 shows the aircraft 10 in a crosswind 102 from the starboard side. The crosswind 102 creates a (clockwise, as shown) roll moment in the aircraft 10 that is reacted by the right landing gear assembly 70 and the left landing gear assembly 72. Specifically, the left landing gear assembly 72 will experience a higher force 104 than the force 106 of the right landing gear assembly 70, thus creating a (counterclockwise, as shown) moment on the aircraft that counteracts the moment caused by the wind. In some embodiments, each of the landing gear assemblies 70, 72, 74 may include one or more landing gear sensors 88, 90, 92 configured to detect the force on the respective landing gear assembly 70, 72, 74. The sensors 88, 90, 92 may be, for example, strain gauges or load cells.

Using the crosswind example shown in FIG. 3, the left sensor 90 may detect a higher load than the right sensor 88 when the aircraft 10 experiences a crosswind from the starboard side. The data from the sensors 88, 90, 92 may be sent to a controller communicably coupled to the sensors 88, 90, 92 and fed to a control algorithm. For example, based on the sensor data indicating that the load measured by the left sensor 90 is higher than the load measured by the right sensor 88, the control algorithm may determine that the aircraft 10 is experiencing a crosswind from the starboard side. While the aircraft 10 is on the ground and the rotor assemblies 28, 32 are rotating, the control system may use cyclic pitch control to adjust the pitch of the blades 34, 38 to create a (counterclockwise, as shown) roll moment that counteracts the roll moment caused by the crosswind 102. By counteracting the roll moment using cyclic pitch control of the rotor blades 34, 38, the forces on the right and left landing gear assemblies 70, 72 can be balanced, such that the right and left landing gear assemblies 70, 72 each support an equal or substantially equal amount of weight and experience the equal or substantially equal amounts of force. During takeoff, if the control algorithm is not taking into account the sensor data from the sensors 88, 90, 92, an operator attempting to take off in a directly vertical direction 108 may drift due to the crosswind and instead take off at an angled direction 110. When the control algorithm is taking into account the sensor data, the control algorithm may already be using cyclic control of the rotor blades 34, 38 to account for the crosswind 102 while the aircraft is on the ground. Thus, as the aircraft leaves the ground, the cyclic control continues to counteract the crosswind 102, and the aircraft 10 can be more easily controlled to take off in the directly vertical direction 108.

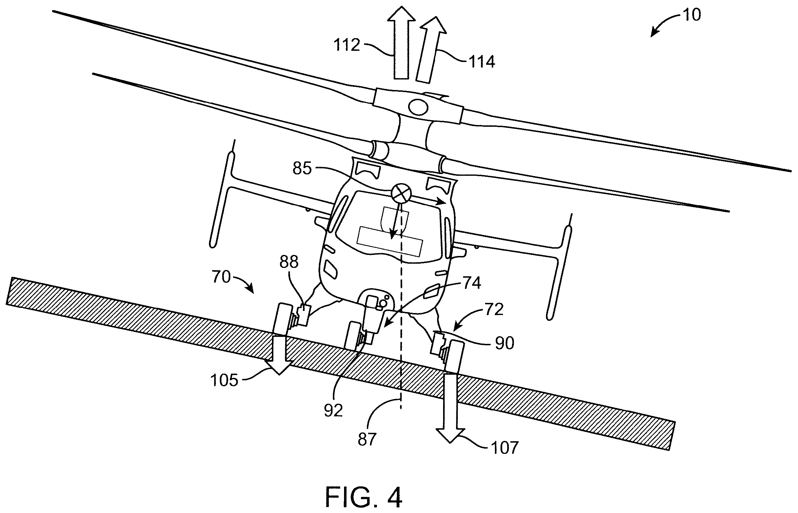

FIG. 4 shows the aircraft 10 on a slope in the lateral (roll) direction. As shown in FIG. 4, the forces on the right and left landing gear assemblies 70, 72 may be different due to the slope if not reacted by the rotor assemblies 28, 32. The downhill landing gear assembly, the left landing gear assembly 72 will experience a higher force 107 than the force 105 on the right landing gear assembly 70, as the slope causes the line of gravity to move towards the left landing gear assembly. With the sensors 88, 90, 92 included in the landing gear assemblies 70, 72, 74, however, the control algorithm can use cyclic pitch control of the rotor blades 34, 38 to counteract the effect of the slope, similar to the way cyclic pitch control is used to counteract the crosswind 102 in FIG. 3.

During takeoff, if the control algorithm is not taking into account the sensor data from the sensors 88, 90, 92, an operator attempting to take off in a directly vertical direction 112 may instead take off at an angled direction 114 perpendicular to the slope's surface. This is because, without cyclic pitch control, the thrust generated by the rotor blades will be directly downward along the axis of rotation of the rotor blades rather than directly downward with respect to gravity. However, when the control algorithm is taking into account the sensor data, the control algorithm may already be using cyclic control of the rotor blades 34, 38 to account for the slope while the aircraft is on the ground. Thus, as the aircraft leaves the ground, the cyclic control continues to counteract the effect of the slope, and the aircraft 10 can be more easily controlled to take off in the directly vertical direction 112.

During flight, the control algorithm of the aircraft is typically augmented using sensor data from an inertial measurement unit (IMU) and an embedded GPS inertial navigation system (EGI). The IMU is a system that uses various devices (e.g., accelerometers, gyroscopes, magnetometers, etc.) to measure the linear and rotational accelerations, and angular rate of the aircraft 10. The EGI is a system that combines GPS location with an inertial navigation system. The EGI provides data including the linear and angular velocity and acceleration of the aircraft 10, the position of the aircraft, the roll, pitch, and platform azimuth of the aircraft 10, and the heading, altitude, and angular rate of the aircraft 10. Together, the IMU and EGI provide sufficient data for the control algorithm to strongly augment the manual controls of the aircraft 10 during flight, making it easier for an operator to maintain control of the aircraft 10. The sensors of the IMU 204 and/or the EGI 206 may collectively be referred to as a flight sensor array.

As discussed above, when any of the landing gear assemblies 70, 72, 74 contact the ground, the normal control algorithm is typically deactivated or changed to a different control algorithm that provides less assistance to the operator. This is because the data from the IMU and EGI is not sufficient to determine the state of the aircraft when in contact with the ground. If the control algorithm were to continue to operate during ground contact, the control algorithm may, for example, interpret the ground contact as a strong crosswind and consequently provide an output for a control that is undesirable (also known as windup). However, during ground contact, the control algorithm may still take into account data from the IMU and/or EGI, in addition to the data from the landing gear sensors 88, 90, 92. For example, data from the IMU (in addition to the data from the landing gear sensors 88, 90, 92) can be used to determine whether the aircraft 10 is on a slope or in a crosswind.

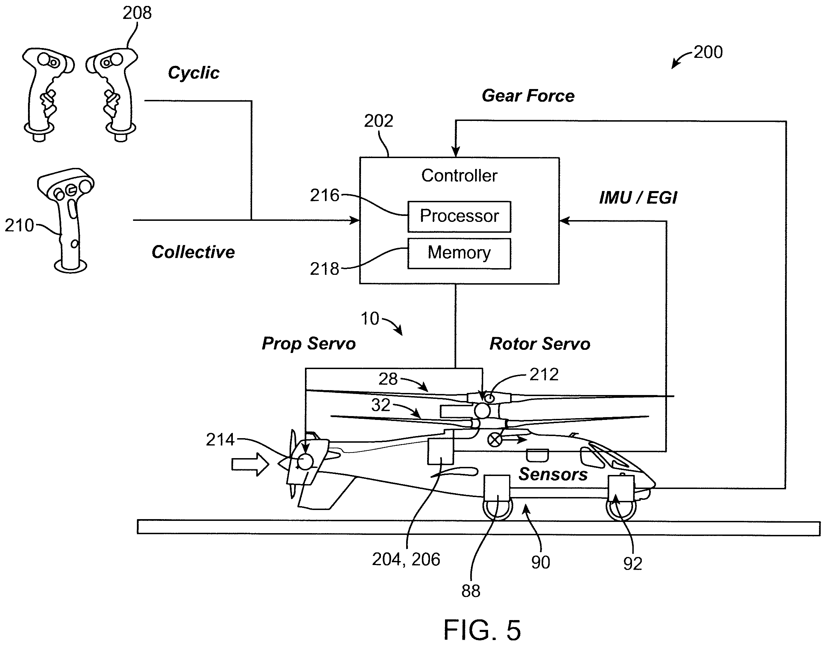

Referring now to FIG. 5, a control system 200 for the aircraft 10 is shown, according to some embodiments. The control system 200 includes a controller 202 configured to receive sensor data from the landing gear sensors 88, 90, 92 and from the IMU 204 and EGI 206. The controller 202 is further configured to receive control commands from a cyclic controller 208 and a collective controller 210. As will be understood by those skilled in the art, the cyclic controller 208 causes the pitch of the rotor blades 34, 38 to vary over the course of a single rotation of the rotor 28, 32. This cyclic control can cause the aircraft 10 to change its pitch, roll, and yaw attitudes. The collective control 210 causes the pitch of the rotor blades 34, 38 (e.g., the average pitch of the rotor blades 34, 38 over the course of a rotation of the rotors 28, 32) to change collectively. This collective control 210 can adjust the thrust generated by the rotor blades 34, 38 to control the altitude and speed of the aircraft 10.

In at least one embodiment, based on the sensor data and the control commands, the controller 202 is configured to control various actuators, such as servo motors 212 of the rotors 28, 32 and servo motors 214 of the propulsor assembly 42. In some embodiments, the aircraft 10 may have additional control actuators controlled by the controller 202 to control the aircraft 10 in flight. The servo motors 212 may control the pitch of the rotor blades 34, 38 by adjusting swashplates. One servo motor 212 may adjust the position of the entire swashplate to adjust the pitch of the rotor blades 34, 38 collectively (i.e., collective pitch control), and another servo motor 212 may cause the swashplate to tilt to adjust the pitch of the rotor blades 34, 38 cyclically (i.e., cyclic pitch control). In some embodiments, the propulsor assembly may be configured only for collective pitch control and may only have one pitch control servo motor 214.

The controller 202 includes a processor 216 and a memory 218. The memory 218 stores instructions that, when executed by the processor 216, cause the controller 202 to execute the operations described herein. As used herein "a controller," "a processor," and "a memory" may respectively refer to one or more controllers, one or more processors, and one or more memories. The controller 202 may be configured to adjust the control algorithm based on the data from the sensors 88, 90, 92 as discussed above. For example, based on the data from the landing gear sensors 88, 90, 92, the controller 202 may determine the total force or weight supported by the landing gear assemblies 70, 72, 74. The controller 202 may then adjust the control algorithm or blend together multiple control algorithms based on the total force or weight supported by the landing gear assemblies 70, 72, 74. The total force or weight supported by the landing gear assemblies 70, 72, 74 may be used to determine how much the data from the landing gear sensors 88, 90, 92 will affect the control of the aircraft. Using the control algorithm, the controller 202 may calculate output commands based on input commands from control devices (e.g., the cyclic controller 208, the collective controller 210, etc.) and transmit the commands to various actuators (e.g., the servo motors 212, 214) to control the aircraft. Unlike aircraft in which the control algorithm switches immediately from a heavily augmented air control algorithm (or air control mode) to a mostly un-augmented ground control algorithm (or ground control mode) when ground contact is detected, the control instructions for the aircraft 10 may provide for a smooth transition between air control and ground control.

As discussed above, the controller 202 may be configured to blend the air control algorithm and the ground control algorithm when the landing gear assemblies 70, 72, 74 are bearing a portion of but less than all of the weight of the aircraft 10 or may be configured to change the parameters of the air control algorithm (like washout) such that a separate algorithm is not required. For example, when the aircraft 10 is landing and makes initial contact with the ground, the landing gear assemblies 70, 72, 74 may initially support 1 percent of the aircraft weight, while the main rotor assembly 18 supports 99 percent of the aircraft weight. As the aircraft 10 continues to lower, the landing gear assemblies 70, 72, 74 support an increasing percentage of the weight, while the main rotor assembly 18 supports a decreasing percentage, until the landing gear assemblies 70, 72, 74 support 100 percent of the weight of the aircraft. During the landing period, the controller 202 may blend the ground control algorithm with the air control algorithm according to the respective percentages of the weight borne by the landing gear assemblies 70, 72, 74 and the main rotor assembly 18. For example, when the landing gear assemblies 70, 72, 74 bear 25 percent of the weight and the main rotor assembly bears about 75 percent of the weight, the controller 202 may use a blended control algorithm that is about 25 percent controlled by the ground control algorithm and about 75 percent controlled by the air control algorithm. It should be appreciated that the foregoing percentages are provided by way of illustration and not by way of limitation, and that the exact percentages or proportions in the blended control algorithm may vary. In 100 percent air control mode, control of the aircraft 10 may not be affected by the data from the landing gear sensors 88, 90, 92. The control algorithm may thus be adjusted based on the total force or weight supported by the plurality of landing gear assemblies 70, 72, 74. When all of the aircraft weight is supported by the plurality of landing gear assemblies 70, 72, 74, the control algorithm may be considered to be in 100 percent ground control mode, and the effect of the data from the landing gear sensors 88, 90, 92 may be at a maximum.

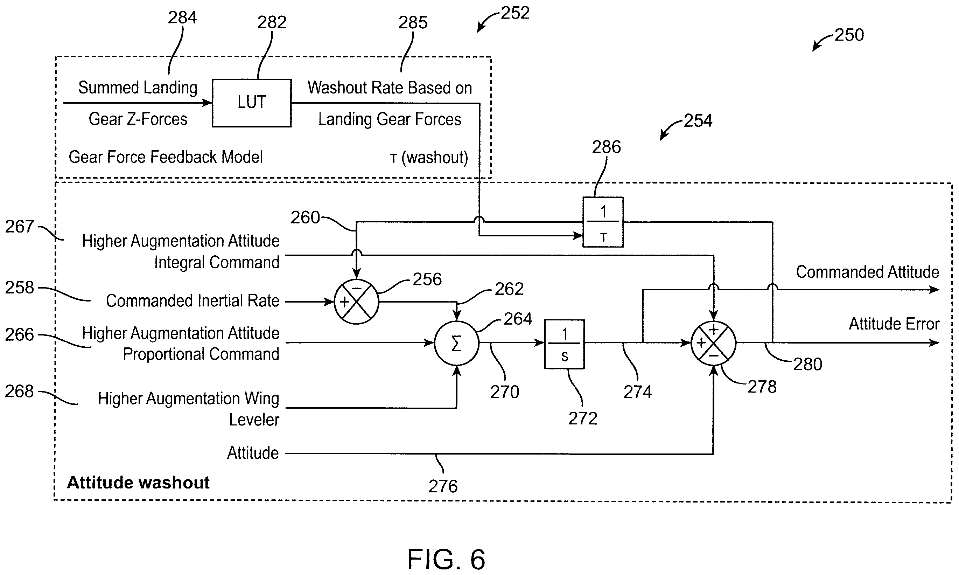

Thus, the aircraft 10 control may gradually transition from 100 percent air control to 100 percent ground control as the weight of the aircraft 10 shifts from the main rotor assembly 18 to the landing gear assemblies 70, 72, 74, rather than the more immediate control algorithm change in typical aircraft. This may enhance operability during takeoff and landing as there is no abrupt change in how the flight controls affect the control of the aircraft 10. In other embodiments, the relationship between the weight borne by the landing gear assemblies 70, 72, 74 and the effect of ground control mode on the control algorithm may not be linear. For example, the effect of ground control mode on the control algorithm may be determined based on a lookup table, with the weight borne by the landing gear assemblies 70, 72, 74 as an input and the effect or influence of the landing gear sensor data on the control algorithm as the output. However, in general, as the weight borne by the landing gear assemblies 70, 72, 74 increases, the effect of ground control mode on the control algorithm will increase. For example, as shown in FIG. 6 and described below, the control algorithm may include an attitude washout calculation based on the difference between commanded and actual attitude, and the attitude washout time constant may be a function of the total force on the landing gear assemblies 70, 72, 74. The total force on the landing gear assemblies 70, 72, 74 may be input into a lookup table to determine a value that may be input into a function to determine the attitude washout time constant. The control features adjusted based on the amount of aircraft weight borne by the landing gear assemblies 70, 72, 74 include attitude washout rates, proportional and integral gains, limits on command authority, and stick shaping and sensitivity.

Without referring to separate specific ground control and air control modes, a control algorithm may be understood to be adjusted based on the total force supported by the landing gear assemblies 70, 72, 74. The amount of weight borne by the landing gear assemblies 70, 72, 74 may determine a degree or amount of influence of the data from the landing gear sensors 88, 90, 92 on the control algorithm. For example, when the total weight supported by the landing gear assemblies 70, 72, 74 is zero, the data from the landing gear sensors 88, 90, 92 (which may be referred to as the landing gear sensor data) may have zero influence on the control algorithm. When the total weight supported by the landing gear assemblies 70, 72, 74 is equal to the total weight of the aircraft 10, the influence of the landing gear sensor data on the control algorithm may be at a maximum. When the total weight supported by the landing gear assemblies 70, 72, 74 is between zero and the total weight of the aircraft 10, the influence of the landing gear sensor data on the control algorithm may be between zero and a maximum.

In aircraft control systems that do not include data from landing gear sensors, the ground slope generally cannot be determined accurately. The other sensors (e.g., the sensors of the IMU 204 and EGI 206) may not have enough information about the state of the aircraft to provide correct control inputs, as the control system cannot account for the effects of ground contact, ground slope, or winds. Thus, the control algorithm may need to be relatively un-augmented compared to more heavily augmented algorithms using more complete sensor data. The data from the landing gear sensors 88, 90, 92 can be used by the controller 202 to determine or estimate a ground slope angle and/or a wind speed and direction and adjust the control algorithm accordingly, such that the output commands calculated by the controller and transmitted to the actuators are calculated based in part on the determined ground slope angle and/or wind speed. Thus, the control algorithm can be more heavily augmented when the aircraft is in contact with the ground than it is in typical aircraft, reducing the workload on the operator. For example, the landing gear sensor data may indicate a larger force on the left landing gear assembly 72 than on the right landing gear assembly 70 (e.g., as shown in FIG. 3). Based on the landing gear sensor data (and in some embodiments, the flight sensor data from the IMU 204 and EGI 206), the controller 202 may determine that a crosswind is causing a clockwise (as shown in FIG. 3) roll moment.

The controller 202, after receiving an input command from a control device (e.g., the cyclic controller 208, the collective controller 210, etc.), may adjust the control algorithm to correctly compensate for the crosswind, for example, by causing the servo motors 212 to cyclically adjust the pitches of the rotor blades 34, 38 (e.g., adjust the pitches of the rotor blades 34, 38 cyclically around the azimuth of the aircraft 10) to generate a counterclockwise roll moment to counteract the crosswind, without winding up. Further, the controller 202 may be configured to adjust the control algorithm such that, during takeoff or landing of aircraft 10, the proportional force differential between two of the landing gear assemblies 70, 72, 74 is maintained throughout the transition. For example, if the right and left landing gear assemblies 70, 72 collectively support four times as much aircraft weight as the nose landing gear assembly 74 at the beginning of a takeoff sequence, the controller 202 may determine the output command such that right and left landing gear assemblies 70, 72 collectively support four times as much aircraft weight as the nose landing gear assembly 74 throughout the entire takeoff sequence. The controller 202 may also ensure that the right landing gear assembly 70 and the left landing gear assembly 72 support the same amount of weight throughout takeoff or landing. The controller 202 may be configured to determine or calculate output commands that ensure that a force on one of the landing gear assemblies 70, 72, 74 does not exceed a predetermined threshold force.

For example, a high amount of force on the right or left landing gear assembly 70, 72 may indicate that the aircraft is on a steep slope. To reduce the likelihood of the aircraft tipping over or sliding, the controller 202 may cause the rotor blades 34, 38 to generate a roll moment counteracting the slope and maintaining the force on the right or left landing gear assembly 70, 72 below the predetermined threshold. As discussed above, the flight sensor data from the IMU 204 and EGI 206 may be used to supplement the data from the landing gear sensors 88, 90, 92. It may be difficult to determine whether the aircraft 10 is on a slope or in a crosswind based on the data from the landing gear sensors 88, 90, 92 alone. As an example, data from an accelerometer of the IMU 204 may be used to determine the slope, and the wind speed may be determined with the data from the landing gear sensors 88, 90, 92 after compensating for the slope.

Because the landing gear sensors 88, 90, 92 allow for more augmented control of the aircraft 10 when in contact with the ground, the control of the aircraft 10 may be substantially the same regardless of the ground contact. Accordingly, the aircraft 10 will respond to similar control inputs (e.g., from the cyclic controller 208 and a collective controller 210) in a similar way in air control mode, ground control mode, and any blend of the two. Because the aircraft 10 may be controlled similarly in air control mode, ground control mode, and any blend of the two, and because the controller 202 is configured to gradually transition from air control mode to ground control mode, operators may more easily execute takeoffs and landings without having to handle an abrupt control mode change. The augmented ground control mode, in addition to the smooth transition from air control mode, also improves safety features including anti-tipping and landing gear overloading. The controller 202 may be configured to use cyclic pitch control of the rotor blades 34, 38 to counteract tipping of the aircraft 10 or overloading of one of the landing gear assemblies 70, 72, 74 automatically, without operator intervention. Without the landing gear sensors 88, 90, 92, such safety features would rely entirely on data from the IMU 204 and EGI 206, which may not be able to determine such events when the aircraft 10 is on the ground.

Though some of the control modes discussed above are described as "air control mode" and "ground control mode," multiple control modes with different levels of augmentation may be possible when the aircraft 10 is in the air or on the ground. For example, in rate control mode, the controller 202 may control the thrust generated by the propulsor assembly 42 proportionally to the input from a manual control. The collective pitch of the main rotor blades 34, 38 may also be controlled proportionally to the operator input to the collective controller 210 to generate thrust. When on the ground, pitch and roll of the aircraft may be controlled using cyclic pitch control of the rotor blades 34, 38 to regulate the force on the landing gear assemblies 70, 72, 74 to avoid overloading the landing gear assemblies 70, 72, 74. In the air, the rate control mode may control the cyclic pitch of the rotor blades 34, 38 to maintain the commanded pitch and roll rates of the aircraft when wind gusts would make it difficult to do so without augmented flight control.

A second control mode with a higher level of augmentation may be referred to as attitude control mode. In attitude control mode, the controller 202 may allow the operator to return the aircraft 10 to a more level attitude with greater ease. Attitude control mode may be useful, for example, when taking off from or landing on a significant ground angle. In attitude control mode, the thrust generated by the propulsor assembly 42 or rotor longitudinal cyclic may be controlled to maintain a commanded ground speed. The collective pitch of the main rotor blades 34, 38 may also be controlled proportionally to the operator input to the collective controller 210, similar to rate control mode. When on the ground, pitch and roll of the aircraft may be controlled using cyclic pitch control of the rotor blades 34, 38 to regulate the force on the landing gear assemblies 70, 72, 74, also similar to rate control mode.

A third control mode with an even higher level of augmentation may be referred to as enhanced position control mode. In enhanced position control mode, the controller 202 controls the various actuators to maintain the aircraft in a particular position, which may be useful during takeoff and landing on a significant ground angle to avoid drift. In enhanced position control mode, the propulsor assembly 42 or rotor longitudinal cyclic may be controlled to maintain a longitudinal position. The roll of the aircraft 10 may be controlled by lateral cyclic control of the rotor blades 34, 38 to maintain lateral position when in the air and maintain the force or relative force on the landing gear assemblies 70, 72, 74 when in contact with the ground.

For example, when in contact with the ground, enhanced position control mode may ensure that the right landing gear assembly 70 and the left landing gear assembly 72 bear the same amount of weight throughout takeoff or landing or may drive increased weight on one gear to hold position (e.g., such that a commanded differential amount of force on the landing gear assemblies 70, 72 is maintained), similar to what a pilot might do. The pitch of the aircraft 10 may be similarly controlled by cyclic control of the rotor blades 34, 38 to maintain the force or relative force on the landing gear assemblies 70, 72, 74 when in contact with the ground. For example, when in contact with the ground, enhanced position control mode may ensure that the ratio of weight supported by the right and left landing gear assemblies 70, 72 and the nose landing gear assembly 74 remains the same throughout takeoff or landing as the ratio when the landing gear assemblies 70, 72, 74 are supporting 100 percent of the aircraft weight. Collective control of the main rotor blades 34, 38 in enhanced position control mode may be controlled proportionally to the operator input to the collective controller 210 to generate thrust when on the ground. In the air, collective control may transition to radar altimeter control to maintain a commanded altitude.

These increasingly augmented control modes may be enabled or armed when on the ground, whereas, in typical aircraft, control of the aircraft when the aircraft is in contact with the ground may be un-augmented or relatively less augmented. Depending on flight conditions, an operator of the aircraft may engage these more highly augmented control modes to reduce the difficulty of takeoff and landing, particularly in windy conditions and on significant ground slope angles.

Referring now to FIG. 6, a control algorithm 250 that may be used by the controller 202 to control the aircraft 10 is shown, according to some embodiments. The control algorithm 250 includes a gear force feedback model 252 and an attitude washout module 254. The attitude washout module 254 includes a first function 256 in which commanded inertial rate 258 is adjusted based on a determined attitude error response rate 260, and an adjusted inertial rate 262 is determined. The attitude washout module 254 includes a second function 264 in which the adjusted inertial rate 262, higher augmentation attitude proportional command 266, and a higher augmentation wing leveler input 268 are combined, and a summed control command 270 is output. The summed control command 270 is provided to an integrator 272, which outputs a commanded attitude 274 for the aircraft 10.

The commanded attitude 274, a higher augmentation attitude integral command 267, and the actual attitude 276 of the aircraft are provided to a third function 278, which compares the actual attitude 276 to the commanded attitude 274 to determine an attitude error 280. The gear force feedback model 252 includes a lookup table 282 that receives the summed forces 284 on the landing gear assemblies 70, 72, 74 and outputs a washout rate 285. The correlations between inputs and outputs of the lookup table 282 may be established in advance. For example, the correlations can be derived using experimental and/or simulation data. The attitude error 280 and the washout rate 285 are provided to an integrator 286 in the attitude washout module 254, which uses the washout rate 285 to define the time constant of the integration function. Based on the attitude error 280 and the washout rate 285, the integrator 286 outputs the determined attitude error response rate 260 to the first function 256, where the determined attitude error response rate 260 is used to adjust the commanded inertial rate 258 as discussed above.

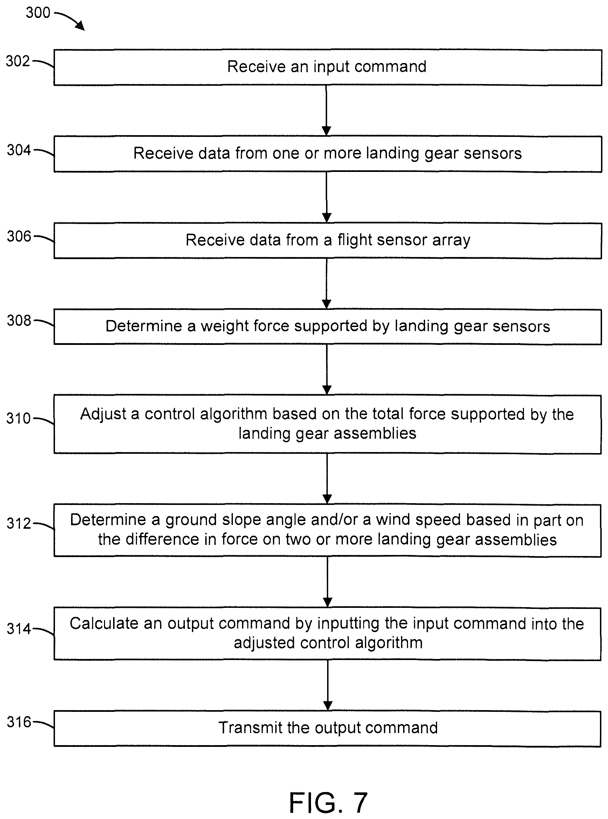

Referring now to FIG. 7, a method 300 of controlling an aircraft (e.g., aircraft 10) is shown, according to some embodiments. The method may be performed, for example, by the controller 202 of the aircraft 10. At operation 302 of the method 300, an input command is received. The input command may be a user input from one or more control devices onboard the aircraft (e.g., the cyclic controller 208 and/or collective controller 210) or may be a remote command from a wirelessly connected device (e.g., if the aircraft is unmanned). At operation 304 of the method 300, data from one or more landing gear sensors (e.g., sensors 88, 90, 92) is received. The data indicates force on one or more landing gear assemblies (e.g., landing gear assemblies 70, 72, 74) of the aircraft. At operation 306 of the method 300, data from a flight sensor array is received. The flight sensor array may include, for example, sensors of the IMU 204 or the EGI 206. At operation 308 of the method 300, the total weight supported by the landing gear assemblies is determined based on the data from the landing gear sensors.

At operation 310 of the method 300, a control algorithm is adjusted based on the total weight supported by the landing gear assemblies. The algorithm may be adjusted such that the landing gear sensor data has more influence on the control algorithm when the total weight supported by the landing gear assemblies is higher and less influence when the total weight supported by the landing gear assemblies is lower. At operation 312 of the method 300, a ground slope angle and/or a wind speed are determined based in part on the difference in force detected on two or more landing gear assemblies. For example, a crosswind speed may be determined based on a difference in force on a left landing gear assembly compared to a right landing gear assembly. The data from the flight sensor array may also be used to determine the ground slope angle and/or the wind speed. For example, data from one or more accelerometers of the IMU 204 may be used to determine whether a difference in force between two landing gear assemblies is due to a ground slope angle or wind.

At operation 314 of the method 300, an output command is calculated by inputting the input command into the adjusted control algorithm. The output command is transmitted to one or more actuators in operation 316. The output command may, for example, cause an actuator to adjust a swashplate to cyclically adjust the pitch of the rotor blades of the aircraft. The control algorithm may compensate for the determined wind speed and/or ground slope angle, so the aircraft will respond to the input command the same, regardless of ground slope and winds. This may reduce the workload of the operator of the aircraft when on the ground.

In at least one embodiment, adjusting the control algorithm based on the total weight supported by the landing gear assemblies can allow for a smooth transition from ground control to air control, making the aircraft easier to control during takeoff and landing. For example, referring again to the control system 200 of FIG. 5, with the aircraft on a substantially flat surface with no wind, an operator may cause the aircraft 10 to take off in a vertical direction by pulling back on the collective controller 210 and keeping the cyclic controller 208 centered. In contrast, without the control system being implemented, if the operator took the same actions (pulling back on the collective controller 210 and keeping the cyclic controller 208 centered) while on a steep slope or in high winds, the aircraft may drift in the downhill or downwind directions during takeoff. With the additional sensor data from the landing gear sensors 88, 90, 92, the operator may take the same actions (pulling back on the collective controller 210 and keeping the cyclic controller 208 centered) and the aircraft 10 may take off in the vertical direction. Thus, the input command may result in the aircraft having the same trajectory, and the aircraft 10 may exhibit equivalent behavior regardless of the ground slope angle or wind speed.

While this specification contains specific implementation details, these should not be construed as limitations on the scope of what may be claimed but rather as descriptions of features specific to particular implementations. Certain features described in this specification in the context of separate implementations can also be implemented in combination in a single implementation. Conversely, various features described in the context of a single implementation can also be implemented in multiple implementations separately or in any suitable sub-combination. Moreover, although features may be described as acting in certain combinations and even initially claimed as such, one or more features from a claimed combination can, in some cases, be excised from the combination, and the claimed combination may be directed to a sub-combination or variation of a sub-combination.

As utilized herein, the terms "substantially," "generally," "approximately," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the appended claims.

More particularly, various numerical values herein are provided for reference purposes only. Unless otherwise indicated, all numbers expressing quantities of properties, parameters, conditions, and so forth, used in the specification and claims are to be understood as being modified in all instances by the term "approximately" or "about." Accordingly, unless indicated to the contrary, the numerical parameters set forth in the following specification and attached claims are approximations. Any numerical parameter should at least be construed in light of the number reported significant digits and by applying ordinary rounding techniques. The term "approximately" or "about" when used before a numerical designation, e.g., a quantity and/or an amount including range, indicates approximations which may vary by ( + ) or ( - ) 10%, 5%, or 1%.

The term "coupled" and the like, as used herein, mean the joining of two components directly or indirectly to one another. Such joining may be stationary (e.g., permanent) or moveable (e.g., removable or releasable). Such joining may be achieved with the two components or the two components and any additional intermediate components being integrally formed as a single unitary body with one another, with the two components, or with the two components and any additional intermediate components being attached to one another.

It is important to note that the construction and arrangement of the various systems shown in the various example implementations is illustrative only and not restrictive in character. All changes and modifications that come within the scope of the described implementations are desired to be protected. It should be understood that some features may not be necessary, and implementations lacking the various features may be contemplated as within the scope of the disclosure, the scope being defined by the claims that follow. When the language "a portion" is used, the item can include a portion and/or the entire item unless specifically stated to the contrary.

The present disclosure contemplates methods, systems, and program products on any machine-readable media for accomplishing various operations, e.g., of the flight control computer. The embodiments of the present disclosure may be implemented using existing computer processors, or by a special purpose computer processor for an appropriate system, incorporated for this or another purpose, or by a hardwired system. For example, the abovementioned description, steps, procedures and/or processes including suggested steps can be implemented using hardware, software, firmware (known as a combination of a hardware device and computer instructions and data that reside as read-only software on the hardware device), an optical printer, or a combination thereof. Examples of hardware can include analog, digital, and mixed circuits known as microcircuits, microchips, or silicon chips.

Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor (e.g., the flight control computer). By way of example, such machine-readable media can comprise read-only memory (ROM); flash memory; random access memory (RAM); EPROM; EEPROM; hard disk; other optical disk storage, magnetic disk storage, or magnetic storage devices; or any other medium which can be used to carry or store desired program code in the form of machine-executable instructions or data structures and which can be accessed by a general purpose or special purpose computer or other machine with a processor and executed to perform the various operations described herein.

Although the figures or description may indicate a specific order of method steps, the order of the steps may differ from what is depicted. For example, in some embodiments, two or more steps may be performed concurrently or with partial concurrence. Additionally, in some embodiments the above-mentioned steps may be carried out in sequence as shown above or even reversed. All such variations are within the scope of the disclosure. While various aspects and embodiments have been disclosed herein, other aspects and embodiments will be apparent to those skilled in the art. The various aspects and embodiments disclosed herein are for purposes of illustration and are not intended to be limiting, with the scope of the invention being indicated by the following claims.

## Claims

1. A control system for a rotary-wing aircraft comprising:
landing gear sensors configured to measure force on a plurality of landing gear assemblies; and
a controller communicably coupled to the landing gear sensors and configured to:
receive an input command for the aircraft;
determine, based on data from the landing gear sensors, a total force supported by the plurality of landing gear assemblies;
adjust a control algorithm based on the total force supported by the plurality of landing gear assemblies;
calculate an output command by inputting the input command into the adjusted control algorithm; and
transmit the output command to control the aircraft.

2. The control system of claim 1, wherein, as the total force supported by the plurality of landing gear assemblies increases from zero to the full weight of the aircraft, the control algorithm transitions from an air control mode in which the control algorithm is not affected by the data from the landing gear sensors to a ground control mode in which the effect of the data from the landing gear sensors on the control algorithm is at a maximum, wherein, when the total force supported by the plurality of landing gear assemblies is between zero and the full weight of the aircraft, parameters of the air control mode and the ground control mode are adjusted or blended based on the total force supported by the plurality of landing gear assemblies.

3. The control system of either one of claim 1 or 2, wherein the controller is configured to determine a ground slope angle of a surface in contact with the plurality of landing gear assemblies based in part on a difference between the force on two or more of the landing gear assemblies, optionally wherein the output command is calculated based in part on the determined ground slope angle and transmitted to one or more actuators to adjust the pitches of rotor blades cyclically around the azimuth of the rotary-wing aircraft.

4. The control system of claim 3, wherein, during a takeoff of the aircraft from a surface with a non-zero ground slope angle, the output command is calculated such that the trajectory of the aircraft is the same as the trajectory of the aircraft during a takeoff from a surface with a ground slope angle of zero, in response to the same input command.

5. The control system of any one of claims 1-4, wherein the output command is calculated to maintain a proportional force differential between two of the landing gear assemblies throughout a takeoff or a landing of the aircraft, optionally wherein the output command is calculated to maintain a substantially equal amount or a commanded differential amount of force on a left landing gear assembly and a right landing gear assembly.

6. The control system of any one of claims 1-5, wherein the output command is calculated to maintain a force on one of the landing gear assemblies below a predetermined threshold force.

7. The control system of any one of claims 1-6, wherein the controller is configured to determine a wind speed based in part on a difference between the force on two or more of the landing gear assemblies, wherein the output command is calculated based in part on the wind speed and transmitted to one or more actuators to cyclically adjust the pitches of rotor blades of the rotary-wing aircraft.

8. A method of controlling a rotary-wing aircraft, the method comprising:
receiving, at a user interface, an input command;
receiving data from one or more landing gear sensors configured to measure force on a plurality of landing gear assemblies of the aircraft;
determining, based on the data from the one or more landing gear sensors, a total force supported by the plurality of landing gear assemblies;
adjusting, by a controller, a control algorithm based on the total force supported by the plurality of landing gear assemblies such that the effect of the data from the one or more landing gear sensors on the control algorithm is correlated to the total force supported by the plurality of landing gear assemblies;
calculating an output command by inputting the input command into the adjusted control algorithm; and
transmitting the output command to control the aircraft.

9. The method of claim 8, further comprising determining a ground slope angle of a surface in contact with the plurality of landing gear assemblies based in part on a difference between the force on two or more of the landing gear assemblies, wherein the output command is adjusted based in part on the determined ground slope angle, optionally wherein the output command is calculated such that the trajectory of the aircraft at takeoff on a non-zero ground slope is similar to the trajectory of the aircraft at takeoff on level ground.

10. The method of either one of claims 8 or 9, wherein the output command is adjusted based on the relative force on the landing gear assemblies.

11. The method of any one of claims 8-10, further comprising determining a wind speed based at least in part on a difference between the force on two or more of the landing gear assemblies, wherein the output command is calculated based at least in part on the determined wind speed.

12. An aircraft comprising:
a fuselage comprising a user interface;
a flight sensor array coupled to the fuselage and configured to generate flight sensor data;
a rotor system coupled to the fuselage and comprising a plurality of rotor blades and at least one actuator configured to cyclically adjust the pitches of the rotor blades;
the control system of one of claims 1 to 7, wherein the controller is communicably coupled to the user interface and the at least one actuator, wherein the output command is transmitted to the at least one actuator; and
the plurality of landing gear assemblies.

13. The aircraft of claim 12, wherein, when the total weight supported by the landing gear assemblies is zero, the influence of data from the landing gear sensors on the control algorithm is zero, and when the total weight supported by the landing gear assemblies is equal to a total weight of the aircraft, the influence of the data from the landing gear sensors on the control algorithm is at a maximum.

14. The aircraft of either one of claims 12 or 13, wherein the controller is further configured to determine, based on the flight sensor data and the data from the landing gear sensors, at least one of a ground slope angle or a wind speed, and wherein the output command is calculated to control the cyclic pitch of the rotor blades to compensate for the at least one of the ground slope angle or the wind speed, optionally wherein the output command is calculated to maintain a substantially equivalent amount or a commanded differential amount of force on a left landing gear assembly and a right landing gear assembly during a takeoff or a landing of the aircraft.

15. The aircraft of any one of claims 12-14, wherein the output command is determined by inputting a user input to the user interface, the flight sensor data, and the data from the landing gear sensors into the adjusted control algorithm, wherein the influence on the control algorithm of the data from the landing gear sensors relative to the flight sensor data is correlated to the total force supported by the landing gear assemblies, optionally wherein the output command is determined by further inputting one or more differences between forces on the landing gear assemblies.
